# EUROPEAN PATENT SPECIFICATION

(11) **EP 2 209 388 B1**
(45) Date of publication and mention of the grant of the patent: **02.11.2016**
(21) Application number: 08831981.9
(22) Date of filing: 18.09.2008
(51) Int. Cl.: A23K 10/22, A23K 10/26, A23K 30/00

(54) **SACRIFICIAL ANTIOXIDANT**
OPFER-ANTIOXIDANS
ANTIOXYDANT SACRIFICIEL

(30) Priority: 19.09.2007 NO 20074776
(43) Date of publication of application: 28.07.2010
(73) Proprietor: Borregaard AS, 1721 Sarpsborg (NO)
(72) Inventor: FREDHEIM, Guro Elise, N-1710 Sarpsborg (NO); GRETLAND, Kristin Sandersen, N-1719 Greåker (NO); STYLO, Tom, N-1659 Torp (NO); BUVARP, Rune, N-1739 Borgenhaugen (NO); KLAUSEN, Bente Seljebakken, N-1709 Sarpsborg (NO); MYRVOLD, Bernt O., N-1709 Sarpsborg (NO); NILVEBRANT, Nils-Olof, S-16732 Bromma (SE); IVERSBY, Sidsel, N-1634 Gamle Fredrikstad (NO)
(74) Representative: Plougmann Vingtoft a/s
(86) International application number: PCT/NO2008/000339
(87) International publication number: WO 2009/038477

(56) References cited:
- EP-A1- 0 565 989
- WO-A1-00/53033
- WO-A1-91/11110
- WO-A1-99/12435
- WO-A1-2006/018119
- WO-A1-2006/025747
- CH-A5- 645 777
- GB-A- 2 406 516
- SE-B- 455 754
- US-A- 3 733 405
- US-A- 4 228 159
- US-A- 4 508 737
- US-A- 4 729 896
- DATABASE WPI Derwent Publications Ltd., London, GB; AN 1988-211343, XP003024269 & SU 1 364 274 A1 (N-W BELOGORKA PLANT) 07 January 1988
- DATABASE WPI Derwent Publications Ltd., London, GB; AN 1998-411797, XP003024270 & RU 2 099 964 C1 (VITON CO LTD) 27 December 1997
- SATOH, K. ET AL.: 'Enhancement of Radical Intensity and Cytotoxic Activity of Ascorbate by PSK and Lignins' ANTICANCER RESEARCH vol. 16, no. 5A, 1996, pages 2981 - 2986, XP003025122

## Description

The present invention concerns the use of lignosulfonate as a stabilisator for organic antioxidants. Specifically, the invention concerns the use of lignosulfonates as a stabilisator for organic antioxidants in organic materials and/or biological materials wherein the antioxidant mixture includes an acid. Since many antioxidants are not approved for consumption at large quantities the present invention affords an opportunity to reduce the added amount of antioxidant on account of the synergistic effect with lignosulfonates. One such example is the addition of ethoxyquin which may be added at reduced amounts to provide an equal antioxidant effect if added together with lignosulfonate.

According to one aspect of the present invention it has surprisingly been found that a mixture of lignosulfonate and ethoxyquin, rosmarinic acid or other antioxidant work better than the pure antioxidant alone. The selected antioxidant seems to be more stable in the solvent when lignosulfonates are present. Additionally lignosulfonates enhance the lifetime of antioxidants when added to organic materials or biological materials. The present invention thus also concerns the embodiments of a composition including an antioxidant in combination with lignosulfonates or sulfonated lignins to be used as an improved antioxidative substance for organic materials or biological materials and the use of lignosulfonates as an additive and enhancer for the antioxidative action of the antioxidants.

### Background:

Organic matter has a strong tendency to react with oxygen and oxidize. This is true for most common organic materials, e.g., plastics, pesticides, cosmetics, elastomers, fibers, fuels, lubricants, silages, feeds and foods. Oxidation of organic materials takes place by a number of processes: auto-oxidation, bio-oxidation, combustion, photo-oxidation. Antioxidants, inhibitors (of oxidation) or oxygen scavengers are organic or inorganic compounds that are added to oxidisable organic or biological materials to retard such oxidation, and in general to prolong the lifetime of the substrates.

Antioxidants are classified as either radical trapping (chain breaking) or peroxide-reducing, that describe the mechanisms by which they function. Radical trapping antioxidants function by reaction with the propagating oxygen free radicals in oxidation. The antioxidant thus competes with the organic substrate as a source of hydrogen for peroxy radicals in the oxidation sequence. The new compound formed must be stable and function as a chain terminator. Peroxide decomposing antioxidants reduce the hydroperoxidic and peroxidic products of oxidation to more innocuous compounds, usually alcohols or ethers.

### Antioxidants in foods and feeds

Antioxidants retard the atmospheric oxidation and its degrading effects, thus extending the shelf life of foods and feeds. Examples of food oxidative degradation include products that contain fats and oils in which oxidation would produce rancid odours and flavours, some of which might even be harmful. Antioxidants are also used to scavenge oxygen and prevent the discoloration of cut or bruised fruits and vegetables. Food antioxidants are effective in very low concentrations and not only retard rancidity, but also protect the nutritional value of the food by minimizing the breakdown of vitamins and essential fatty acids. Both synthetic and natural antioxidants exist and examples are listed in Table 1.

**Table 1. Food Antioxidants and Their Manufacturing Processes [1]**

| Antioxidant compound | Manufactured by |
|---|---|
| ***Oil-soluble antioxidants*** | |
| Butylated hydroxyanisole (BHA) | Synthesis |
| butylated hydroxytoluene (BHT) | Synthesis |
| Tert-butyl-hydroxquinone(TBHQ) | Synthesis |
| Propyl gallate (PG) | Synthesis |
| Tocopherols | Extraction / synthesis |
| Thiodipropionic acid | Synthesis |
| Dilauryl thiodipropionate | Synthesis |
| Ascorbyl palmitate | Synthesis |
| Ethoxyquin | Synthesis |

| ***Water-soluble antioxidants*** | |
|---|---|
| Ascorbic acid | Fermentation |
| Sodium ascorbate | Fermentation |
| Erythorbic acid | Fermentation |
| Sodium erythorbate | Fermentation |
| Glucose oxidase/catalase enzymes | Fermentation |
| Gum guaiac | Extraction |
| Sulfites | Synthesis |
| Rosemary extract | Extraction |

The antioxidants most commonly used to stabilize food include butylated hydroxyanisole (BHA), butylated hydroxytoluene (BHT), propyl gallate (PG) and tert-butylhydroquinone (TBHQ). In Europe, other gallate esters, such as octyl gallate and dodecyl gallate are also used. Both BHA and BHT are fat-soluble, effective in protecting animal fat from oxidation, and often added during the rendering process. Use of BHT and BHA as direct food additives have been questioned as a result of increased incidence of cancer in animal studies. Propyl gallate is also effective, but it has limited fat solubility, and turns bluish black in the presence of iron. The TBHQ is most effective against oxidation in polyunsaturated vegetable oils, and is often used in soybean oil.[1]

The most frequently used natural antioxidants are ascorbic acid (vitamin C), its stereoisomer erythorbic acid and the sodium salts thereof (sodium ascorbate, sodium erythorbate), in addition to the mixed delta and gamma tocopherols. Tocopherols are not as effective in vegetable fats and oils as they are in animal fats. Citric acid and tartaric acid are also natural antioxidants (and antioxidant synergists) but are predominantly added to foods as acidulants [1].

In addition, several plant extracts are recommended as natural antioxidants, including rosemary extracts *(Rosmarinus officinalis),* and gum guaiac, a resinous secretion of a tropical evergreen, *Guaiacum officinalis.* This resin contains complex phenolic compounds chemically related to guaiacol, guaiaretic acid, and guaiaconic acid. Like other phenolic compounds, gum guaiac is more effective in animal fats than in vegetable oils [1].

The activity of antioxidants in a food system is not only dependent on the chemical reactivity of the antioxidant (e.g., free radical scavenging, 3D structure and chelation), but also factors such as physical location, interaction with other food components, and environmental conditions (e.g. pH). One of the major factors affecting the activity of antioxidants that scavenge free radicals in foods is their partitioning behavior in lipids and water. For example, hydrophilic antioxidants are often less effective in oil-in-water emulsions than lipophilic antioxidants, whereas lipophilic antioxidants are less effective in bulk oils than hydrophilic antioxidants [2]. Modicied macromolecular lignins are proved to have both hydrophiolic and lipophilic parts.

### Stabilisation of fuels, lubricants and polymers

Hydrocarbon fuels, gasoline, jet fuel and fuel oil are all subject to autooxidation. The main phenolic antioxidants for fuels are BHT, 2,4-dimethyl-6-tert-butylphenol, and 2,6-ditert-butylphenol. N,N'-di-sec-butyl-p-phenylenediamine has been of great importance among the aminic antioxidants. Added amount of antioxidant is in the ratio 0.5-1.0 kg per 1000 barrels of fuel (1 US barrel= 159 1). [3]

Antioxidants minimize the deterioration of lubricants by retarding viscosity increase, metal corrosion, and formation of acid, sludge, resins and lacquers. Commercial organic polymers, including thermoplastics, elastomers, synthetic fibers, and adhesives, are all susceptible to oxidative degradation during both processing and end use. For both lubricants, elastomers and thermoplasts, hindered phenolic antioxidants such as BHT are used.

### Chemical composition of antioxidants

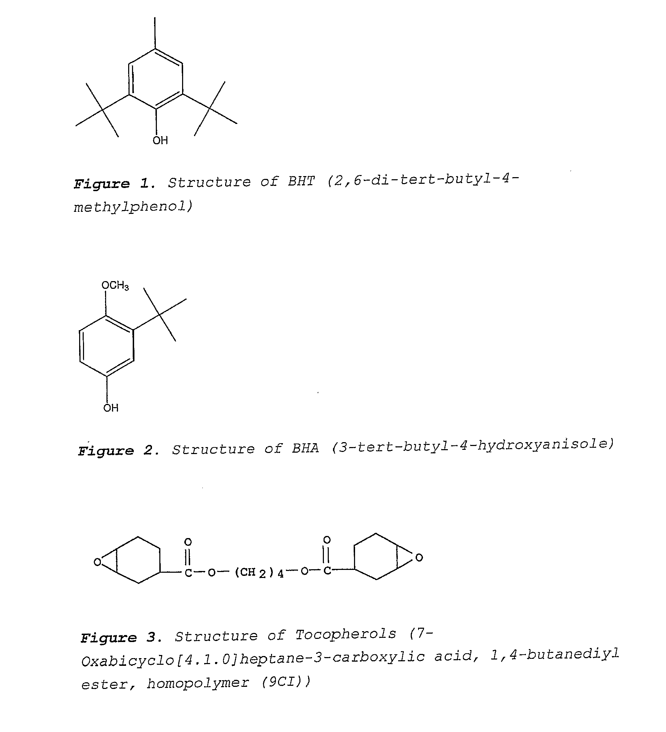

In the figures 1 to 6 below, molecular structures of some common antioxidants are listed. Trapping of intermediate radicals in molecules like BTA and BHT (Table 1) is a property that also is built in to lignins. The lignins structure contain both phenolic and non-phenolic moieties together with substituents that shield reactive positions, like in the above mentioned molecules. The tridimentional structure of lignosulfonates makes it suitable for stabilizing radicals. The introduced sulfonic acid groups in lignosulfonates turn the originally lipophilic lignin macromolecules into water soluble antioxidants. Autoxidation in mixtures containing hydrophilic and hydrophobic material the interface are most prone for the activity. The combined lipophilic and hydrophilic properties make the ligninsulfonates especially useful in the interfacing areas. Lignins also possess light-absorbing properties.

### Ethoxyquin

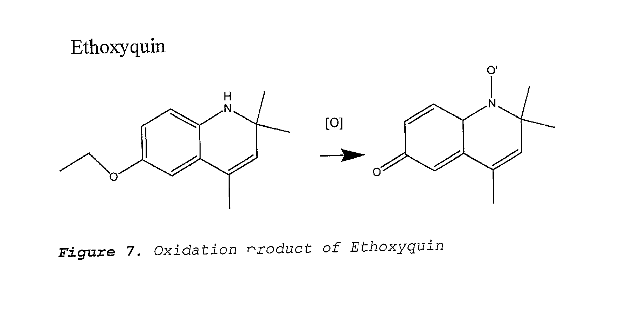

There are several oxidation products of ethoxyquin formed. Only one of them is shown in Figure 7. Ethoxyquin is particularly effective in protecting fish silage but may also be used to protect other types of silage as well. The molecule is both oil and water soluble. However, ethoxyquin is not very stable. It is unstable in acid, towards oxidizing agents and towards light. According to one aspect of the present invention it has surprisingly been found that lignosulfonate contributes to an increased stability of ethoxyquin.

### Rosmarinic acid

Rosmarinic acid, C₁₈H₁₆O₈, is a natural polyphenol antioxidant carboxylic acid found in many *Lamiaceae* herbs used commonly as culinary herbs such as rosemary, oregano, sage, thyme and peppermint. Chemically, rosmarinic acid is a dimer of caffeic acid. It is a red-orange powder that is slightly soluble in water, but well soluble in most organic solvents. [4]

### BHT

Butylated hydroxytoluene (BHT), is a lipophilic (fat-soluble) organic compound that is primarily used as an antioxidant food additive (E number E321) as well as in cosmetics, pharmaceuticals, jet fuels, rubber, petroleum products, and embalming fluid. The species behaves as a synthetic analogue of vitamin E, primarily acting as a terminating agent that suppresses autoxidation, a process whereby unsaturated (usually) organic compounds are attacked by atmospheric oxygen. BHT stops this autocatalytic reaction by converting peroxy radicals to hydroperoxides.[5]

### Silage

In industrial fish farming and catching of fish as well as preparing fish products, there are produced substantive quantities of waste material. Fish waste is subjected to auto-degradation from enzymes liberated during the preparation process. Addition of a preservation additive helps conservation of the waste making it into a valuable stable raw material, silage. As preservation additive, acids of different types are often used, normally formic acid. Under the right conditions, i.e. temperature above 5 °C, and a pH between 3.5 and 4.5, the fish mass will start to decompose. The low pH value will prevent bacteria to grow, at the same time as the fish mass will undergo autolysis (decompose), and a floating, easy to handle mass is obtained. The autolysis process is faster at temperatures around 40 °C. The same is true for other biological materials, e.g. from slaughterhouses, food and feed industries.

By-products from fisheries and slaughterhouses go both to consumption and to more high-grade applications. With the help of biotechnology one can expect a lot of new valuable by-products from the fish breeding and animal farming industry. For example:
- High quality omega 3-oils and cod liver oil
- Gelatine from fish skin, heads and bones, technological use, pharmaceutical and in food industry.
- Phosphor-containing lipids (phospholipids) from milt, used for infant nutrition as well as intravenous nutrition.
- DNA from milt, used in cosmetic and pharmaceutical industry
- Organic substances from fish and animal entrails (enzymes) for industrial processes.
- Fermented fish sauce as taste enhancer.

Also silage from animal waste materials (e.g. from slaughterhouses) or waste materials from the food industry (excess production materials) may be treated similarly with the fish silage indicated supra. Although the composition of the different types of materials may differ (different ratios of fat, oil, proteins, saccharides, connective tissue, etc.) the process for producing silage from these types of materials will be equal (see infra). As raw material for fish silage as well as animal silage one can use nearly all types of waste from the fish and/or animal industry.

### Silage additive

One of the preferred acids to treat raw fish material as well as animal raw material for producing silage is formic acid. Formic acid give minor residual taste to the silage, as well as it is an effective acidulant. In Table 2 some physical and chemical properties for organic acids are listed.

**Table 2. Physical and chemical properties for organic acids. [6]**

| Acid | Formula | Mw [g/mol] | Density [g/ml] | *pK*ₐ |
|---|---|---|---|---|
| Formic | HCOOH | 46, 03 | 1,220 | 3,75 |
| Acetic | CH₃COOH | 60,05 | 1,049 | 4,76 |
| Propionic | CH₃CH₂COOH | 74,08 | 0,993 | 4,88 |
| Lactic | CH₃CH(OH)COOH | 90,08 | 1,206 | 3,83 |

Antioxidants are also preferred to be used when producing fish and/or animal silage. Marine lipids from fish contain high levels of long chain polyunsaturated fatty acids (PUFA) such as eicosapentaenoic acid (EPA) and docosahexaenoic acid (DHA). The PUFAs are readily oxidized by molecular oxygen. This oxidation means a corrosion of the unsaturated compounds, which results in rancidity of the fats and a reduced product quality after processing. Fish meal and fish oil contain relatively high concentrations of PUFAs and are therefore especially prone to oxidation [7]. The most common methods for analyzing primary lipid oxidation are the peroxide value or conjugated dienes, and the aniside value as a number for secondary oxidation products.

To prevent the oxidation of especially fishmeal and - oil, as well as meat and waste products from the meat and/or food industry, the industry currently uses synthetic antioxidants like: ethoxyquin (E324), BHA (butylated hydroxyl anisol, E 320) and BHT (butylated hydroxyl toluene, E321). Antioxidants prevent the oxidation of the fatty acids by preferential reaction with oxygen. Synthetic antioxidants are the most commonly used antioxidants in food systems because of their chemical stability, low cost and availability.

### Prior art:

In the literature the antioxidant effect of lignin in food, polypropylene, plastics and rubber, styrene and archais oils have been reported [7-12].

There is but one patent upon a fish silage formulation of carboxylic acid in combination with antioxidants, i.e. NO Patent: 309796 B1 owned by Kemira and by the inventors K. Aasbø, H. Breivik. This patent concerns at least one antioxidant amongst: 2,6-di-tert-butyl-4-metylfenol (BHT), 3-tert-butyl-4-hydroxyanisol (BHA), tert-butylhydroqinon (TBHQ), tokoferol and gallates, combined with at least one short chained carboxylic acid, or at least one salt thereof.

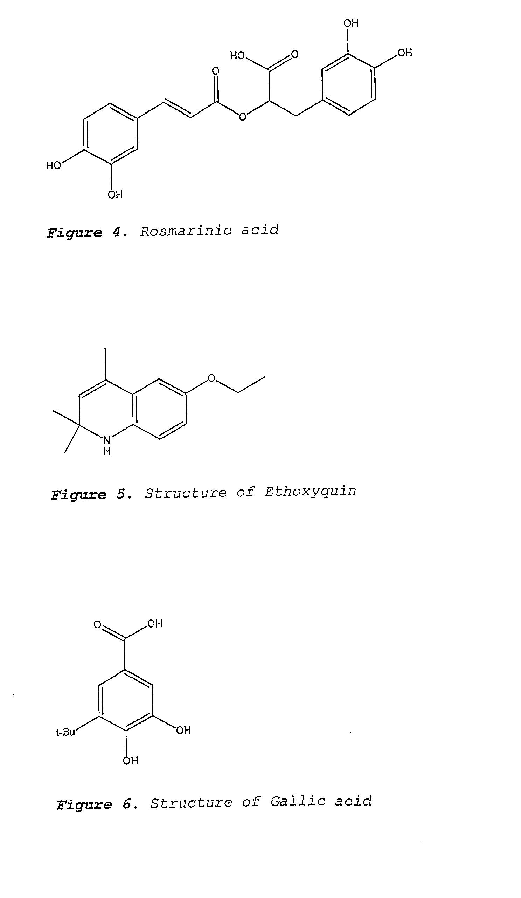

A combination of formic acid and antioxidant is the marked leader in Norway as conservation medium in silage of fish. Formic acid is added to adjust pH to 3.7-4 and reduce the growth of bacteria in the silage. Antioxidant is added to reduce the rancidity process of the fish oil. The often used antioxidant is ethoxyquin seen in Figure 4(1, 2-dihydro-6-etoxy-2,2,4-trimetylquinoline (CAS-Nr 91-53-2). Ethoxyquin, a cyclic amine, is soluble in acids at low pH (<3) since the amino group is protonated and a hydrophilic salt is formed. An increase in pH, 4-5, gives deprotonation and the ethoxyquin is oil soluble. Ethoxyquin is particularly effective in protecting fish ensilage, although it can be used in other application arias as e.g. silage from slaughter houses. As mentioned the molecule is both oil and water soluble. However, ethoxyquin is not very stable. It is unstable in acid, towards oxidising agents and towards light. Thus, in one aspect the present invention concerns stabilizing ethoxyquin while simultaneously provide an improved and synergistic effect for its scavenging properties by using lignosulfonates.

US 4228159 discloses lignin sulfonates used to coat trace minerals. The coated minerals are then mixed with Vitamin A. The vitamin is thus protected from detrimental effect of the minerals.

### General disclosure of the invention:

The invention concerns the use of lignosulfonates as a stabilisator for organic antioxidants in organic materials and/or biological materials wherein the antioxidants mixture includes an acid. In the literature the antioxidant effect of lignin in food, polypropylene, plastics and rubber, styrene and archais oils have been reported [6-11]. According to the present invention it was surprisingly found that lignosulfonates also exert a synergistic effect in combination with antioxidants ex. ethoxyquin, rosmarinic acid etc.

To assess and verify the effect of lignosulfonate as antioxidant several lignosulfonic samples have been tested in different antioxidant screenings [13, 14]. The samples tested gave good antioxidant score, and the results are shown in table 3 below.

**Table 3. Samples tested for antioxidant effect [14].**

| Sample | Peroxynitrite test (= total antiox. effect) | Hydroxyl radical test (= for water soluble/hydrophilic samples) | Halogenated oxidants test (= for oil soluble/lipophilic samples) |
|---|---|---|---|
| Sodium lignosulfonate | 18750 | 3300 | |
| Desulfonated, oxidated lignosulfonate | 82300 | 9100 | |
| Sodium lignosulfonate, low Mw fraction* | 23600 | 4100 | |
| Sodium lignosulfonate, mid Mw fraction* | 24900 | 7600 | |
| Sodium lignosulfonate, high Mw fraction* | 95700 | 1300 | |
| Ethoxyquin | 118000 | | 5640 |
| Mixed tocopherols | 3200 | | 670 |
| BHT | 550 | | 220 |

| | | | |
|---|---|---|---|
| *Fractionated samples with a certain molecular weight average. Note: The numbers in the columns are corrected for dry matter content. | | | |

Five types of lignosulfonates were investigated; sodium lignosulfonate, a desulfonated oxidized lignosulfonate, and three fractions of a sodium lignosulfonate; low, medium and high molecular weight. As can be seen from the table 3 above, it is evident that all of them show good antioxidant effect. The desulfonated oxidized lignosulfonate had the best antioxidant effect compared to the sodium lignosulfonate samples. Further the high molecular weight fraction of lignosulfonate had superior antioxidant capacity than the low molecular weight fraction. As a comparison the synthetic antioxidant Ethoxyquin, gave the highest score in the test. The antioxidant BHT scored lowest in the test showing that lignosulfonates possess good antioxidative properties. All over the table above shows that lignosulfonates as general possess antioxidative capacity.

The present invention provides an option to reduce the amount of added antioxidants in the fish and/or animal and/or food silage. Since many antioxidants are not approved for consumption at large quantities ex. ethoxyquin the present invention affords an opportunity to reduce the added amount of antioxidant on account of the synergistic effect with lignosulfonates. One such example is the addition of ethoxyquin which may be added at reduced amounts to provide an equal antioxidant effect if added together with lignosulfonate. In comparison the toxicity of lignosulfonate is almost non existing (LD₅₀> 10g/kg). [16]

It has also surprisingly been found that a mixture of lignosulfonate and ethoxyquin work better as an antioxidant than ethoxyquin alone, or than an additive effect of lignosulfonate and ethoxyquin (synergism). The ethoxyquin is more stable in a solution when lignosulfonates are present as well. Lignosulfonate has limited solubility in an oil phase. Without wanting to be limited by theory, the lignosulfonate could thus act as a sacrificial agent in the water phase. If lignosulfonate is oxidised first, then ethoxyquin will be protected. It should be noted that the lignosulfonate concentration is much higher than the ethoxyquin concentration. So even if lignosulfonates are much less effective on weight for weight basis, the total effect could be larger. The lignosulfonate (and sodium sulphate added as a part of the lignosulfonate solution) could also salt out the ethoxyquin and force more of it into the oil phase. Lignosulfonates have a strong dark colour and absorb strongly in the ultraviolet part of the spectrum. The dark colour could thus protect the ethoxyquin towards degradation due to the effect of light. Ethoxyquin seems to have a maximum in the UV adsorption at 280 nm (or the same as lignosulfonates).

Different aspects of the present invention (among others) may be summarized by the following items:
- A composition for converting animalic material such as fish and/or meat and/or food material into silage, said composition comprising lignosulfonate and an organic acid together with a further antioxidant or a composition for converting fish and/or meat and/or food material into silage, said composition comprising lignosulfonate and an organic acid selected from one or more of the group consisting of formic acid, acetic acid, lactic acid, propionic acid and butyric acid.
- A composition for converting animalic material such as fish and/or meat and/or food material into silage, said composition comprising lignosulfonate and an organic acid together with a further antioxidant or a composition for converting fish and/or meat and/or food material into silage, said composition, where the lignosulfonate is of the type calcium, sodium, magnesium and ammonia lignosulfonates.
- A composition for converting animalic material such as fish and/or meat and/or food material into silage, said composition comprising lignosulfonate and an organic acid together with a further antioxidant or a composition for converting fish and/or meat and/or food material into silage, said composition, where the lignosulfonate is of the type sodium lignosulfonates, in the molecular weight average range Mw = 25-40 kDa.

The composition of the silage product would as an example comprise 10-90% organic acid, 0.2-3.0 % Ethoxyquin and 5-50% lignosulfonate (depending upon the dry matter content of the lignosuolfonate solution used). Other examples of solutions comprising Ethoxyquin, lignosulfonate and acid according to the present invention include: Acid in the range of 40-90%, more preferred 50-80%; Ethoxyquin in the range of 0.2-1.5%, more preferred 0.2-1.5%; and lignosulfonate in the range of 5-30% (all of the percentages referring to w/w based on the dry matter content of the lignosulfonate solution used).

To illustrate the present invention the following figures have been provided:
Figure 1 - *Structure of BHT (2,6-di-tert-butyl-4-methylphenol) .*
Figure 2 - *Structure of BHA (3-tert-butyl-4-hydroxyanisole).*
Figure 3 - *Structure of tocopherols (7-Oxabicyclo[4.1.0]heptane-3-carboxylic acid, 1,4-butanediyl ester, homopolymer (9CI)).*
Figure 4 - *Structure of rosmarinic acid.*
Figure 5 - *Structure of Ethoxyquin.*
Figure 6 - *Structure of Gallic acid.*
Figure 7 - *Oxidation product of Ethoxyquin.*
Figure 8 - *Autoxidation of rosmarinic acid with oxygen at elevated temperature without and in the presence of two different lignosulfonates.*
Figure 9 - *Peroxide values as a function of time. Composition of products: EQ: % ethoxyquin, NAac:* % *LS, FA:* % *Formic acid (85 %)*.

### Examples:

### EXAMPLE 1

A stability study of ethoxyquin in formic acid compared to ethoxyquin in formic acid/lignosulfonate solution has been performed.

### Experimental

An analysis method for determination of ethoxyquin reported by He and Ackman [15] have been introduced. The analyses were performed on an Agilent 1100 liquid chromatography system equipped with a Macherey-Nagel HPLC Column, CC 125/3 Nucleodur C18 Pyramid 3µm column and a UV detector. The absorbance was measured at 280 nm. The column temperature was 27 °C and the flow of the mobile phase was 1 ml/min. The solutions to be investigated contained 50:49:1 of formic acid:sodium lignosulfonate:EQ (w/w%) and was compared to a control 50:49:1 of formic acid:water:EQ (w/w%), it was not taken into account that the formic acid was 85 %, the EQ sample was 75 %, and the solution lignosulfonate solution was 35 % dry matter.

100 g of each sample was prepared and split into two samples that were stored in respectively a glass and a metal container. This was done to see the effect of light upon the samples.

Analyses of the amount of ethoxyquin in the samples were performed for 10 weeks.

### Results

Results from the stability study of ethoxyquin are shown in table 4.

After 2 weeks storage 94 % of the added ethoxyquin is remaining in the sample containing lignosulfonate, whilst in the sample containing no lignosulfonate only 70 % is remaining. After 10 weeks storage 70 % of the added ethoxyquin is remaining in the sample containing lignosulfonate, whilst only 1 % remains in the sample without lignosulfonate.

**Table 4. Ethoxyquin (%) in samples upon storage**

| | EQ/formic acid/lignosulfonate | | EQ/formic acid/Milli-Q water | |
|---|---|---|---|---|
| Time [weeks] | Glass container | Metal container | Glass container | Metal container |
| Start | 100 | 100 | 100 | 100 |
| 1 | 94 | 95 | 86 | 84 |
| 2 | 87 | 94 | 72 | 70 |
| 4 | 79 | 88 | 52 | 42 |
| 6 | 71 | 82 | 35 | 22 |
| 8 | 61 | 74 | 21 | 8 |
| 10 | 52 | 70 | 10 | 1 |

### EXAMPLE 2

The trial in example 1 was repeated with a set of new samples, Sample 1: 0.35 g ethoxyquin, 80.00g Formic acid (85%), and 19.65 g lignosulfonate solution, sample 2: 0.35 g ethoxyquin, 80.00g Formic acid (85%), and 19.65 g MQ-water. The samples were stored in glass and metal containers for 5 weeks. Analyses of the amount of ethoxyquin in the samples were performed each week according to procedure described above.

### Results

Results from the stability study of ethoxyquin are shown in table 5.

**Table 5. Ethoxyquin (%) in samples upon storage**

| | EQ/formic acid/lignosulfonate | | EQ/formic acid/Milli-Q water | |
|---|---|---|---|---|
| Time [weeks] | Glass container | Metal container | Glass container | Metal container |
| Start | 100 | 100 | 100 | 100 |
| 1 | 84 | 85 | 80 | 69 |
| 3 | 71 | 77 | 37 | 15 |
| 4 | 61 | 72 | 20 | 2 |
| 5 | 50 | 66 | 9 | 0 |

After 5 weeks storage no ethoxyquin is found in the sample stored in a metal container, whilst only 9 % is left in the sample stored in the glass container when no lignosulfonate is added. In the samples added lignosulfonate 66 and 50 % respectively, of ethoxyquin is still available after 5 weeks storage. Addition of lignosulfonate significantly increases the stability of ethoxyquin.

### EXAMPLE 3

The combined effect of lignosulfonate was in addition shown in autoxidation experiments using two different lignosulfonates and rosmarinic acid as a representative for a different antioxidant. The antioxidant rosmarinic acid was completely degraded in an atmosphere of oxygen at 65°C during a period of four days with intermittent saturation with oxygen twice a day. In parallel the same concentration of antioxidant, rosmarinic acid 1%, was supplemented with lignosulfonate. The tested lignins were a sodium lignosulfonate (LS 1) and a calcium lignosulfonate (LS 2), both added in the same amounts based on dry content (17%). Samples were withdrawn daily and the amount of remaining antioxidant was chromatographically quantified. Reversed-phase HPLC with UV-detection at 280 nm was the method of choice for monitoring the positive effect of LS.

### Results

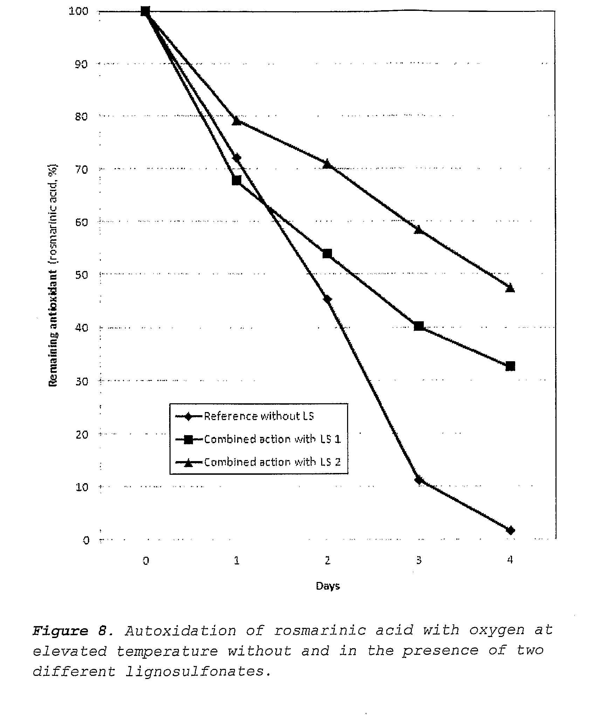

A saving of almost half of the most expensive and reactive antioxidant was obtained when the most efficient lignosulfonate tested was used (Table 6, Figure 8).

**Table 6. Autoxidation of rosmarinic acid.**

| | **Reference without LS** | **Combined effect with LS** | |
|---|---|---|---|
| | **Rosmarinic acid** | **LS 1** | **LS 2** |
| Day 0 | 100 | 100 | 100 |
| Day 1 | 72 | 68 | 79 |
| Day 2 | 45 | 54 | 71 |
| Day 3 | 11 | 40 | 58 |
| Day 4 | 2 | 33 | 48 |

### EXAMPLE 4

Laboratory trials preparing fish silage from minced salmon added formic acid and ethoxyquin, with and without lignosulfonate, have been performed. A mixture of 0.65 (w/w%) ethoxyquin, 19.4 (w/w%) lignosulfonate, and 80 (w/w%) formic acid was compared to a competitor product containing 0.5-1.0 (w/w%) ethoxyquin in an 85 % formic acid solution. Isolated fish oil have been analysed with respect to peroxide values.

### Experimental

1 day fresh salmon were chopped into pieces and minced in a food processor. 1500 g of minced fish were placed in plastic bottles and added 45g w/w % sample the first day. The bottles were shaken to get a good mix with the fish. Day two more acid was added to achieve a pH between 3.3 and 3.4. The silage samples were placed in a water bath during the entire experiment in order to retain a stable temperature of 23 degrees.

Day 1 (0), 4, 7 and 14 100 g fish silage from each bottle was transferred to centrifuge tubes and centrifuged at 3000 rpm for 15 minutes. Fish oil was separated from the silage and frozen (-20 °C). The oil phase was analysed for peroxide values.

### Results

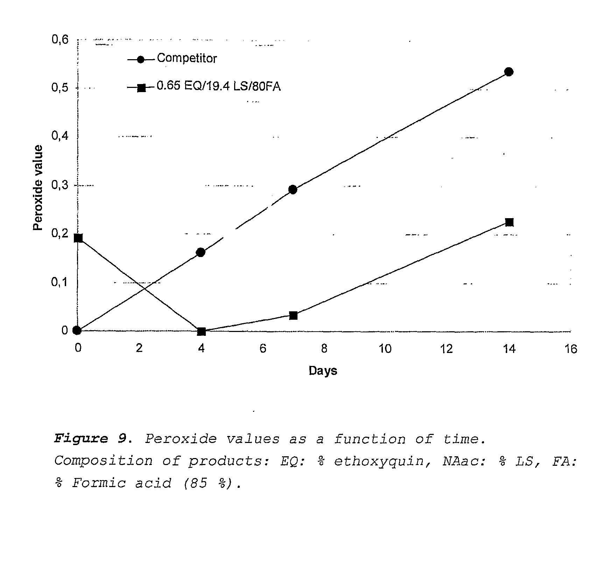

Figure 9 shows peroxide values for fish oil extracted from fish-silage prepared with an ethoxyquin/formic acid additive compared to an ethoxyquin/lignosulfonate/formic acid additive. The silage conserved with the additive containing lignosulfonate contains less primary oxidation products, i.e. has lower peroxide numbers.

### EXAMPLE 5

A silage trial with Norwegian Salmon was performed in collaboration with a large Norwegian producer of marine byproducts. The performance of a product containing 0.35 (w/w%) Ethoqyquin (EQ), 19.6 (w/w%) lignosulfonate (LS) and 80 (w/w%) Formic acid was compared to a formic acid based competitor containing 1.0 (w/w%) ethoxyquin. The quality of products produced from fish silage conserved was analysed with standard methods.

A 2.5 % dosage of was used during the production of 280 tons of silage. This dosage gave a pH of 3.6 in the silage. Typically, the pH in silage is adjusted to below 4.

### Results

The results from analysis of fish silage stabilised with a ethoxyquin, lignosulfonate, formic acid product (0.35 % Ethoqyquin, 19.6 % lignosulfonate and 80 % Formic acid ) compared to silage stabilised with a formic acid based competitor containing 1.0 % ethoxyquin are shown in table 7.

Values of pH, total volatile nitrogen (TVN), protein-, fat-and dry matter content were all in the same range as the competitor. For peroxide values, aniside values, biogenic amines and analysis on microbial flora the ethoxyquin, lignosulfonate, formic acid product gave superior results.

**Table 7. Large scale silage trial**

| Sample | Fish silage with EQ/LS/Formic acid | Fish silage with competitor product, Formic acid/EQ |
|---|---|---|
| **Raw material:** | | |
| Fat (%) | 11.5 | |
| Protein N*6.25 (%) | 11.6 | 13.3 |
| Dry matter (%) | 34.5 | 33.6 |
| pH | 3.4 | 3.4 |

| **Fat phase:** | | |
|---|---|---|
| TVN (% of sample) | <0.01 | 0.08 |
| Peroxide numbers (meqv/kg) | 5.5 | 63 |
| Aniside numbers | 42 | 125 |

| **Biogenic amines:** | | |
|---|---|---|
| Cadaverine (mg/kg) | <1 | 185 |
| Histamine (mg/kg) | <1 | <100 |
| Putrecine (mg/kg) | 37 | 105 |

| **Microbiology:** | | |
|---|---|---|
| Clostridium perferingens (numbers/g(mL)) | <10 | |
| Mould (numbers/g(mL)) | <100* | |
| Yeast (numbers/g(mL)) | <100* | |

| | | |
|---|---|---|
| * < 100 means below detection limit. | | |

In addition to the synergistic properties of lignosulfonates on antioxidants according to the present invention, the addition of lignosulfonates to acidified fish silage does not have any detrimental effects with respect to microbial growth in the silage, as evidenced by the results shown in in table 7 supra where all the values for microbial flora, mould or yeast are below the detection limit (less than 100/g (ml)).

The present invention also concerns a kit for preservation of organic or biological materials including a composition comprising lignosulfonates and/or modified lignins and an acid as disclosed supra in a separate container, and wherein the kit further comprises the additional antioxidant in a separate container. Such a kit will also include instructions for use and optionally instructions for storage of the kit. For improving the shelf life of the second antioxidant (besides the lignosulfonates and/or modified lignin) it may be stored in a sealed container (optionally under an inert atmosphere such as N₂ or CO₂) or in an evacuated container. The container for storing the antioxidant may also include a light-impenetrable material for protecting the antioxidant from photo-degradation. The acid in the container including the lignosulfonate(s) and/or modified lignin may be an inorganic acid such as hydrochloric, phosphorous, sulfuric acid and/or an organic acid such as formic acid, acetic acid, lactic acid, propionic acid, butyric acid. The antioxidants in the second container of the kit according to the present invention may be ethoxyquin, rosmarinic acid, BHT, tocopherols, vitamin C, catechins, gallates, and especially preferred ethoxyquin, or the further antioxidant may be an inorganic substance, e.g. sulfites or iodide. The lignosulfonate and/or modified lignin included in the first container in the kit according to the invention may as an example be selected from the group calcium, sodium, magnesium or ammonia lignosulfonates, most preferred sodium or calcium lignosulfonate. In a special embodiment the lignosulfonate included in the kit according to the present invention is of the type sodium lignosulfonate, in the molecular weight average range Mw = 25-40 kDa.

In addition to the above discovered synergistic effect of lignosulfonates and/or modified lignins, such compounds also posses the properties of being anticorrosive hereby protecting metallic components of equipment used for mixing and/or processing the silage or biological material [17].

### References

[1] Somogyi, L.P. (2004) Food, additives; Kirk Othmer Encyclopedia of Chemical Technology.
[2] Decker, E.A., Warner, K., Richards, M.P.,Shahidi, F. (2005) Measuring Antioxidant Effectiveness in Food. J. Agri. Food Chem. 53(10), 4303-4310.
[3] Klemchuk, P. (2000) Antioxidants; Ullmanns Encyclopedia of Industrial Chemistry, John Wiley & Sons, Inc.
[4] Rosma Clifford, M.N. (1999) Chlorogenic acids and other cinnamates. Nature, occurrence and dietary burden. J. Sci. Food. Agric. (79) 362-37.
[5] Burton, G. W.; Ingold, K. U. (1981) "Autoxidation of biological molecules. 1. Antioxidant activity of vitamin E and related chain-breaking phenolic antioxidants in vitro", Journal of the American Chemical Society, volume 103, pp 6472-6477.
[6] Foegeding PM and Busta FF (1991) Chemical food preservatives. In Disinfection, Sterilisation and Preservation, pp 802-932 [SS Block, editor]. Philadelphia, PA: Lea and Febiger.
[7] Murata, Kiyoshi, Kondo and Yoshikazu (2003) Extraction of lignins using cellulase complex enzyme and their uses as antioxidant. Jpn. Kokai Tokkyo Koho, patent JP2003169690.
[8] Pouteau C, Dole P, Cathala B, Averous L and Boquillon N (2003) Antioxidant properties of lignin in polypropylene. Polymer Degradation and Stability 81 (1), 9-18.
[9] Reinosa O, Can B T and Richard J L (1998) Lignin yield and antioxidant activity obtained at different pH. Sociedad Chilena de Quimica 43 (4) 367-373.
[10] Barclay L R C, Xi F and Norris J Q (1997) Antioxidant properties of phenolic lignin model compounds. Journal of wood chemistry and technology 17, 73-90.
[11] Furlan L T, Rodriges M and De Paoli M A (1985) Sugarcane bagasse lignin as stabilizer for rubbers. Polymer Degradation and Stability 13 (4), 337-350.
[12] Guttman T and Odzeniak D (1994) Antioxidant properties of lignin and its fractions. Thermochimica Acts 231, 161-168.
[13] Gundersen SA (2006) Screening of antioxidant properties of LS. Internal report Borregaard LignoTech.
[14] Knight Scientific report (2007) Determination of total antioxidant capacity of samples from Borregaard and derived ABEL-RAC mg scores.
[15] He, P. and Ackman, R. G., (2000) J. Sci. Food Agric., 80:10-16.
[16] LD₅₀-values; Norwegian School of Verterinary Medicine, (1976).
[17] Evju, H. (1999) Growth enhancers, patent WO 00/27220.

## Claims

1. The use of lignosulfonate as a stabilisator for organic antioxidants in organic materials and/or biological materials wherein the antioxidant mixture includes an acid.

2. The use according to claim 1 of the lignosulfonate as a synergistic enhancer for the antioxidant.

3. The use according to claim 1-2 wherein the antioxidant is ethoxyquin, Rosmarinic acid, BHT, tocopherols, vitamin C, catechins, gallates, preferably ethoxyquin.

4. The use according to any of the claims 1-3 in the conversion of biological material into silage.

5. The use according to claim 4, wherein the material is fish-material and/or meat-material and/or food material and/or feed material preferably fish-material more preferred fish waste material.

6. The use according to any of the preceding claims, wherein the acid is an organic acid.

7. The use according to any of the preceding claims, wherein the acid is an inorganic acid.

8. The use according to claim 6, wherein the organic acid is formic acid, acetic acid, lactic acid, propionic acid, butyric acid.

9. The use according to claim 7, wherein the inorganic acid is hydrochloric acid, phosphorous acid, sulfuric acid.

10. The use according to any of the preceding claims wherein the lignosulfonate is chosen from calcium, sodium, magnesium or ammonia lignosulfonates.

11. The use according to any of the preceding claims wherein the lignosulfonate is sodium or calcium lignosulfonates.

12. The use according to any of the preceding claims wherein the lignosulfonate is sodium lignosulfonates of the molecular weight average range Mw = 25-40 kDa.

13. Composition for converting organic or biological material into silage, **characterised in that** the composition comprises lignosulfonate and a second antioxidant wherein the composition further comprises an inorganic acid, or an organic acid selected from one or more of the group consisting of formic acid, acetic acid, lactic acid, propionic acid, butyric acid.

14. Composition according to claim 13, wherein the second antioxidant is selected from one or more of antioxidants included in the group consisting of ethoxyquin, Rosmarinic acid, BHT, tocopherols, vitamin C, catechins, gallates, preferably ethoxyquin.

15. Composition according to claim 13, wherein the inorganic acid is one or more acids selected from the group consisting of hydrochloric acid, phosphorous acid, sulphuric acid.

16. Composition according to any of the claims 13-14 wherein the lignosulfonate is selected from one or more of the group consisting of calcium, sodium, magnesium or ammonia lignosulfonates.

17. Composition according to claim 13-14, wherein the lignosulfonate is sodium or calcium lignosulfonate.

18. Composition according to any of the claims 13-14 wherein the lignosulfonate is of the type sodium lignosulfonate, in the molecular weight average range Mw = 25-40 kDa.

19. Composition according to any of the claims 13-18 wherein the composition contains 10-90 (w/w) % acid, 0.2-3.0 (w/w) % ethoxyquin and 5-50 (w/w) % lignosulfonate.

20. Composition according to claim 19, wherein the composition contains 40-90 (w/w%) acid, 0.2-1.5 (w/w%) ethoxyquin and 5-30 (w/w%) lignosulfonate.

21. Composition according to claims 19 or 20, wherein the composition contains 50-80(w/w%) acid, 0.3-1.0 (w/w%) ethoxyquin and 5-30 (w/w%) lignosulfonate.

22. Kit for preservation of organic or biological materials including a composition comprising lignosulfonates and an acid in a separate container together with the additional antioxidant in a separate container wherein the further antioxidant may be ethoxyquin, Rosmarinic acid, BHT, tocopherols, vitamin C, catechins, gallates, preferably ethoxyquin

23. Kit according to claim 22 wherein the acid is an inorganic acid e.g. such as hydrochloric, phosphorous, sulphuric acid.

24. Kit according to claim 22 wherein the acid is an organic aid as e.g. such formic, acetic, lactic, propionic, butyric acid.

25. Kit according to claim 22 wherein the lignosulfonate is calcium, sodium, magnesium or ammonia lignosulfonates.

26. Kit according to claim 22 wherein the lignosulfonate is sodium or calcium lignosulfonate.

27. Kit according to claim 22 wherein the lignosulfonateis of the type sodium lignosulfonate in the molecular weight average range Mw = 25-40 kDa.

28. Use of lignosulphonate to stabilize ethoxyquin in a solution.

## Patentansprüche

1. Verwendung von Lignosulfonat als Stabilisator für organische Antioxidantien in organischen Materialien und/oder biologischen Materialien, wobei die Antioxidansmischung eine Säure einschließt.

2. Verwendung nach Anspruch 1 des Lignosulfonats als ein synergistischer Verstärker des Antioxidans.

3. Verwendung nach Anspruch 1-2, wobei das Antioxidans Ethoxychin, Rosmarinsäure, BHT, Tocopherole, Vitamin C, Katechine, Gallate, vorzugsweise Ethoxychin, ist.

4. Verwendung nach einem der Ansprüche 1-3 bei der Umwandlung von biologischem Material in Silage.

5. Verwendung nach Anspruch 4, wobei das Material Fischmaterial und/oder Fleischmaterial und/oder Nahrungsmittelmaterial und/oder Futtermittelmaterial ist, vorzugsweise Fischmaterial, mehr bevorzugt Fischabfallmaterial.

6. Verwendung nach einem der vorhergehenden Ansprüche, wobei die Säure eine organische Säure ist.

7. Verwendung nach einem der vorhergehenden Ansprüche, wobei die Säure eine anorganische Säure ist.

8. Verwendung nach einem der vorhergehenden Ansprüche, wobei die organische Säure Ameisensäure, Essigsäure, Milchsäure, Propionsäure, Buttersäure ist.

9. Verwendung nach Anspruch 7, wobei die anorganische Säure Salzsäure, Phosphorsäure, Schwefelsäure ist.

10. Verwendung nach Anspruch 6, wobei das Lignosulfonat ausgewählt ist aus Calcium-, Natrium-, Magnesium- oder Ammoniumlignosulfonaten.

11. Verwendung nach einem der vorhergehenden Ansprüche, wobei das Lignosulfonat Natrium- oder Calciumlignosulfonate ist.

12. Verwendung nach einem der vorhergehenden Ansprüche, wobei das Lignosulfonat Natriumlignosulfonate in dem durchschnittlichen Molekulargewichtsbereich Mw = 25-40 kDa ist.

13. Zusammensetzung zur Umwandlung von organischem oder biologischem Material in Silage, **dadurch gekenntzeichnet,** dass die Zusammensetzung Lignosulfonat und ein zweites Antioxidans umfasst, wobei die Zusammensetzung weiterhin eine anorganische Säure oder eine organische Säure umfasst, ausgewählt aus einem oder mehreren der Gruppe, bestehend aus Ameisensäure, Essigsäure, Milchsäure, Propionsäure, Buttersäure.

14. Zusammensetzung nach Anspruch 13, wobei das zweite Antioxidans ausgewählt ist aus einem oder mehreren Antioxidantien in der Gruppe, bestehend aus Ethoxychin, Rosmarinsäure, BHT, Tocopherole, Vitamin C, Katechine, Gallate, vorzugsweise Ethoxychin.

15. Zusammensetzung nach Anspruch 13, wobei die anorganische Säure eine oder mehrere Säuren ist, ausgewählt aus der Gruppe, bestehend aus Salzsäure, Phosphorsäure, Schwefelsäure.

16. Zusammensetzung nach einem der vorhergehenden Ansprüche 13-14, wobei das Lignosulfonat ausgewählt ist aus einem oder mehreren der Gruppe, bestehend aus Calcium-, Natrium-, Magnesium- oder Ammoniumlignosulfonaten.

17. Zusammensetzung nach Anspruch 13-14, wobei das Lignosulfonat Natrium- oder Calciumlignosulfonat ist.

18. Zusammensetzung nach einem der Ansprüche 13-14, wobei das Lignosulfonat vom Typ Natriumlignosulfonat in dem durchschnittlichen Molekulargewichtsbereich Mw = 25-40 kDa ist.

19. Zusammensetzung nach einem der Ansprüche 13-18, wobei die Zusammensetzung 10-90 Gew.-% Säure, 0,2-3,0 Gew.-% Ethoxychin und 5-50 Gew.-% Lignosulfonat enthält.

20. Zusammensetzung nach Anspruch 19, wobei die Zusammensetzung 40-90 Gew.-% Säure, 0,2-1,5 Gew.-% Ethoxychin und 5-30 Gew.-% Lignosulfonat enthält.

21. Zusammensetzung nach Anspruch 19 oder 20, wobei die Zusammensetzung 50-80 Gew.-% Säure, 0,3-1,0 Gew.-% Ethoxychin und 5-30 Gew.-% Lignosulfonat enthält.

22. Kit zum Konservieren von organischen oder biologischen Materialien mit einer Zusammensetzung, umfassend Lignosulfonate und eine Säure in getrennten Behältern zusammen mit dem zusätzlichen Antioxidans in einem getrennten Behälter, wobei das weitere Antioxidans Ethoxychin, Rosmarinsäure, BHT, Tocopherole, Vitamin C, Katechine, Gallate, vorzugsweise Ethoxychin, sein kann.

23. Kit nach Anspruch 22, wobei die Säure eine anorganische Säure ist, beispielsweise Salzsäure, Phosphorsäure, Schwefelsäure.

24. Kit nach Anspruch 22, wobei die Säure eine organische Säure ist, beispielsweise Ameisensäure, Essigsäure, Milchsäure, Propionsäure, Buttersäure.

25. Kit nach Anspruch 22, wobei das Lignosulfonat Calcium-, Natrium-, Magnesium- oder Ammoniumlignosulfonat ist.

26. Kit nach Anspruch 22, wobei das Lignosulfonat Natrium- oder Calciumlignosulfonat ist.

27. Kit nach Anspruch 22, wobei das Lignosulfonat vom Typ Natriumlignosulfonat in dem durchschnittlichen Molekulargewichtsbereich Mw = 25-40 kDa ist.

28. Verwendung von Lignosulfonat zur Stabilisierung von Ethoxychin in einer Lösung.

## Revendications

1. L'utilisation de lignosulfonate comme stabilisateur d'antioxydants organiques dans des matières organiques et/ou des matières biologiques, dans laquelle le mélange antioxydant comprend un acide.

2. L'utilisation selon la revendication 1 du lignosulfonate comme amplificateur synergique de l'antioxydant.

3. L'utilisation selon les revendications 1 à 2, dans laquelle l'antioxydant est de l'éthoxyquine, de l'acide rosmarinique, du BHT, des tocophérols, de la vitamine C, des catéchines ou des gallates, préférentiellement de l'éthoxyquine.

4. L'utilisation selon l'une quelconque des revendications 1 à 3 dans la transformation de matière biologique en ensilage.

5. L'utilisation selon la revendication 4, dans laquelle la matière est une matière de type poisson et/ou une matière de type viande et/ou une matière alimentaire et/ou une matière d'alimentation animale, préférentiellement une matière de type poisson et plus préférentiellement une matière de type déchet de poisson.

6. L'utilisation selon l'une quelconque des revendications précédentes, dans laquelle l'acide est un acide organique.

7. L'utilisation selon l'une quelconque des revendications précédentes, dans laquelle l'acide est un acide inorganique.

8. L'utilisation selon la revendication 6, dans laquelle l'acide organique est de l'acide formique, de l'acide acétique, de l'acide lactique, de l'acide propionique ou de l'acide butyrique.

9. L'utilisation selon la revendication 7, dans laquelle l'acide inorganique est de l'acide chlorhydrique, de l'acide phosphorique ou de l'acide sulfurique.

10. L'utilisation selon l'une quelconque des revendications précédentes, dans laquelle le lignosulfonate est choisi parmi des lignosulfonates de calcium, de sodium, de magnésium ou d'ammonium.

11. L'utilisation selon l'une quelconque des revendications précédentes, dans laquelle le lignosulfonate est des lignosulfonates de sodium ou de calcium.

12. L'utilisation selon l'une quelconque des revendications précédentes, dans laquelle le lignosulfonate est des lignosulfonates de sodium dont la plage moyenne de masse moléculaire est Mw = 25 à 40 kDa.

13. Composition pour transformer une matière organique ou biologique en ensilage, **caractérisée en ce que** la composition comprend du lignosulfonate et un deuxième antioxydant, dans laquelle la composition comprend également un acide inorganique, ou un acide organique choisi parmi un ou plusieurs acides du groupe composé de l'acide formique, l'acide acétique, l'acide lactique, l'acide propionique ou l'acide butyrique.

14. Composition selon la revendication 13, dans laquelle le deuxième antioxydant est choisi parmi un ou plusieurs antioxydants compris dans le groupe composé de l'éthoxyquine, l'acide rosmarinique, le BHT, les tocophérols, la vitamine C, les catéchines ou les gallates, préférentiellement l'éthoxyquine.

15. Composition selon la revendication 13, dans laquelle l'acide inorganique est un ou plusieurs acides choisis dans le groupe composé de l'acide chlorhydrique, l'acide phosphorique ou l'acide sulfurique.

16. Composition selon l'une quelconque des revendications 13 à 14, dans laquelle le lignosulfonate est choisi parmi un ou plusieurs lignosulfonates du groupe composé des lignosulfonates de calcium, de sodium, de magnésium ou d'ammonium.

17. Composition selon les revendications 13 à 14, dans laquelle le lignosulfonate est du lignosulfonate de sodium ou de calcium.

18. Composition selon l'une quelconque des revendications 13 à 14, dans laquelle le lignosulfonate est de type lignosulfonate de sodium, dans la plage moyenne de masse moléculaire Mw = 25 à 40 kDa.

19. Composition selon l'une quelconque des revendications 13 à 18, dans laquelle la composition contient 10 à 90 % (p/p) d'acide, 0,2 à 3,0 % (p/p) d'éthoxyquine et 5 à 50 % (p/p) de lignosulfonate.

20. Composition selon la revendication 19, dans laquelle la composition contient 40 à 90 % (p/p) d'acide, 0,2 à 1,5 % (p/p) d'éthoxyquine et 5 à 30 % (p/p) de lignosulfonate.

21. Composition selon les revendications 19 ou 20, dans laquelle la composition contient 50 à 80 % (p/p) d'acide, 0,3 à 1,0 % (p/p) d'éthoxyquine et 5 à 30 % (p/p) de lignosulfonate.

22. Kit pour la conservation de matières organiques ou biologiques contenant une composition comprenant des lignosulfonates et un acide dans un contenant séparé ainsi que l'antioxydant supplémentaire dans un contenant séparé, dans lequel l'antioxydant supplémentaire peut être de l'éthoxyquine, de l'acide rosmarinique, du BHT, des tocophérols, de la vitamine C, des catéchines ou des gallates, préférentiellement de l'éthoxyquine.

23. Kit selon la revendication 22, dans lequel l'acide est un acide inorganique tel que, par exemple, l'acide chlorhydrique, phosphorique ou sulfurique.

24. Kit selon la revendication 22, dans lequel l'acide est un acide organique tel que, par exemple, l'acide formique, acétique, lactique, propionique ou butyrique.

25. Kit selon la revendication 22, dans lequel le lignosulfonate est des lignosulfonates de calcium, de sodium, de magnésium ou d'ammonium.

26. Kit selon la revendication 22, dans lequel le lignosulfonate est du lignosulfonate de sodium ou de calcium.

27. Kit selon la revendication 22, dans lequel le lignosulfonate est de type lignosulfonate de sodium dans la plage moyenne de masse moléculaire Mw = 25 à 40 kDa.

28. Utilisation de lignosulfonate pour stabiliser de l'éthoxyquine dans une solution.
